# EUROPÄISCHE PATENTSCHRIFT

(11) **EP 0 742 558 B1**
(45) Veröffentlichungstag und Bekanntmachung des Hinweises auf die Patenterteilung: **17.08.2005**
(21) Anmeldenummer: 96201215.9
(22) Anmeldetag: 02.05.1996
(51) Int. Cl.: G11B 17/04

(54) **Lademechanismus**
Loading mechanism
Mécanisme de chargement

(30) Priorität: 06.05.1995 DE 19516733
(43) Veröffentlichungstag der Anmeldung: 13.11.1996
(73) Patentinhaber: Philips Intellectual Property & Standards GmbH, 20099 Hamburg (DE); Koninklijke Philips Electronics N.V., 5621 BA Eindhoven (NL)
(72) Erfinder: Scholz, Thomas, 22335 Hamburg (DE)
(74) Vertreter: Volmer, Georg, Dipl.-Ing.

(56) Entgegenhaltungen:
- EP-A- 0 516 496
- EP-A- 0 558 302
- DE-A- 3 421 947
- DE-A- 4 139 034
- US-A- 4 682 320
- US-A- 5 163 040
- PATENT ABSTRACTS OF JAPAN vol. 008, no. 188 (P-297), 29.August 1984 & JP 59 075461 A (SANYO DENKI KK;OTHERS: 01), 28.April 1984,

## Beschreibung

Die Erfindung bezieht sich auf einen Lademechanismus für ein Gerät zum Speichern von Informationen auf einer Informationsplatte und/oder zum Wiedergeben von auf einer Informationsplatte gespeicherten Informationen, welcher Führungen für den Plattenrand aufweist, von denen eine Stützführung als ein Stützlager für den gegen sie gedrückten Plattenrand ausgebildet ist und eine Ladeführung als ein drehend antreibbares Transportrad ausgebildet ist, das die Informationsplatte zum Laden in das Gerät hineinrollt bzw. zum Entladen aus diesem herausrollt, wobei die Stützführung und die Ladeführung die Informationsplatte auf einer Ladebahn führen.

Eine solche Einrichtung ist aus der US-PS 51 63 040 bekannt. Die Informationsplatte wird durch einen Öffnungsschlitz in das Gerät eingeführt. In dem Gerät wird die Informationsplatte auf der einen Seite als Stützführung von einer starren, kurvenförmigen und genuteten Führungskontur und auf der anderen Seite als Ladeführung von einer genuteten Gummirolle geführt. Die Gummirolle ist von einem Motor antreibbar. Um die Informationsplatte in das Gerät einzuführen, wird diese von Hand in den Öffnungsschlitz des Gerätes eingesteckt und mit den Nuten der Stützführung und der Ladeführung in Eingriff gebracht. Daraufhin wird der Motor entweder mittels eines manuell zu betätigenden Schalters oder mittels eines Detektionsorgans, welches die mit der Nut der Ladeführung und der Nut der Stützführung in Eingriff gebrachte Informationsplatte detektiert, eingeschaltet. Die Gummirolle der Ladeführung wird beim Ladevorgang vom Motor angetrieben und rollt die Informationsplatte zwischen sich und der Stützführung auf einer kurvenförmigen Ladebahn in das Gerät.

Eine derartige Konstruktion weist jedoch eine Reihe von Nachteilen auf. Bedingt durch die kurvenförmige Stützführung ist es nur möglich, die Informationsplatte auf einer kurvenförmigen Ladebahn entlang der Stützführung in das Gerät einzuführen, eine geradlinige Einführung ist jedoch nicht möglich. Dies erfordert im Vergleich zu einer geradlinigen Einführung der Informationsplatte eine größere Breite des Lademechanismus und damit auch des Gerätes. Insbesondere für den Einsatz im Automobilbereich ist dies ein erheblicher Nachteil, da dort der zur Verfügung stehende Raum für den Einbau des Gerätes begrenzt ist.

Die runden Informationsplatten weisen in ihrer Mitte ein Positionierloch auf. Um die Plattenoberfläche zu schonen, ist es vorteilhaft, wenn die Informationsplatte von der Hand einer Bedienperson nur am Rand des Positionierloches und am äußeren Rand der Informationsplatte berührt wird.
Bei der bekannten Anordnung muß der Mittelpunkt der Informationsplatte von Hand mindestens bis auf die Höhe des Mittelpunktes der Gummirolle der Ladeführung in die nachfolgend als Zwischenstellung bezeichnete Position eingebracht werden, bevor der Lademechanismus den selbsttätigen Einzug der Informationsplatte übernimmt. Das Positionierloch ragt in dieser Zwischenstellung nicht mehr über die Front des Gehäuse nach außen, und die Bedienperson kann die Informationsplatte nicht in der gewünschten Weise am Rand des Positionierloches und am äußeren Rand der Informationsplatte fassen. Die Bedienperson wird damit gezwungen, für das Einbringen der Informationsplatte in die Zwischenstellung die Oberfläche der Informationsplatte zu berühren. Dies bedingt einen erhöhten Verschleiß der Informationsplatte.

Aus US 4 682 320 A ist ein Lademechanismus für einen CD-Spieler bekannt, welcher eine CD mittels einer oder zwei angetriebener Rollen entweder einseitig oder beidseitig in den CD-Spieler einzieht. In einer ersten Ausführungsform rollt die CD auf einer festen Wand als Stützführung ab und wird auf der gegenüberliegenden Seite von einer motorgetriebenen Rolle als Ladeführung eingezogen. In einer zweiten Ausführungsform weist der Lademechanismus zwei motorgetriebene Ladeführungen auf, welche jeweils eine motorgetriebene Rolle aufweisen und die CD so ins Innere des Lademechanismus befördern.

Eine weitere Ladevorrichtung für einen CD-Spieler offenbart DE 41 39 034 A. Sie weist im wesentlichen zwei beweglich gelagerte Walzen zum Transport einer CD in den CD-Spieler auf. Über eine Reibeingriffseinrichtung wird dafür gesorgt, daß die Walzen mit einer bestimmten Kraft an der Kante der CD anliegen und diese mitnehmen.

Es ist Aufgabe der Erfindung, einen Lademechanismus der eingangs genannten Art zu realisieren, welcher möglichst geringe Abmessungen aufweist und welcher das Laden bzw. Entladen der Informationsplatte ermöglicht, ohne deren Oberfläche zu berühren.

Diese Aufgabe wird erfindungsgemäß durch Anspruch 1 gelöst.

Die bewegbare Lagerung der Stützführung und der Ladeführung ermöglicht es, daß sich diese gemäß der äußeren Kontur der Informationsplatte bewegen und so den Plattenrand der Informationsplatte flexibel führen können. Dadurch wird der Einzug der Informationsplatte auf nahezu beliebig vorgebbaren Ladebahnen möglich. Es ist ebenfalls möglich, Informationsplatten, die keinen kreisförmigen Plattenrand aufweisen (z. B. mit ovalen oder andersartig ausgebildeten Plattenrändern ) mittels eines derartigen Lademechanismus in das Gerät einzurollen. Für die bewegbare Lagerung der Stützführung und der Ladeführung sind verschiedenartigste Lagerungen denkbar. So ist es z.B. möglich, daß die Stützführung und die Ladeführung in Nuten geführt sind und in diesen Nuten mittels Federkraft oder mittels Stellantrieben gegen den Plattenrand gedrückt werden können.

Die Informationsplatte wird von den Führungen lediglich an ihren Rändern berührt, während die die Signale speichernde Oberfläche der Informationsplatte von den Führungen unberührt bleibt. Dadurch werden mögliche Beschädigungen der die Signale speichernden Oberfläche vermieden.

Das Positionierloch der Informationsplatte ragt in der Zwischenstellung, in die die Informationsplatte von der Bedienperson eingeschoben wird und von der ab der Lademechanismus die Informationsplatte selbsttätig einrollt, über die Front des Gehäuses hinaus nach Außen. Dies ermöglicht es der Bedienperson, die Informationsplatte derart von Hand in die Zwischenstellung einzubringen, daß diese von der Hand der Bedienperson nur am inneren Rand des Positionierloches der Informationsplatte und am äußeren Rand der Informationsplatte berührt wird. Eine Beschädigung der Oberfläche der Informationsplatte durch die Hand der Bedienperson wird damit vermieden.
Ebenso ist es möglich, die Informationsplatte auf dieselbe Weise in einer Auswurfstellung aus dem Gerät zu entnehmen. Auch in der Auswurfstellung drücken die Stützführung und die Ladeführung gegen den Plattenrand und die Informationsplatte wird von der Stützführung und der Ladeführung stabil gehalten, so daß ein selbsttätiges Herausrollen der Informationsplatte aus dem Gerät verhindert wird. Es ist möglich, den Lademechanismus so zu konstruieren, daß ca 85% des Durchmessers der Informationsplatte über die Front des Gehäuses hinaus nach Außen ragen.

Eine weitere vorteilhafte Ausgestaltung der Erfindung ist dadurch gekennzeichnet, daß die Stützführung und die Ladeführung an einseitig gelagerten Schwenkarmen angeordnet sind.

Dies ist eine besonders einfache und kostengünstige Möglichkeit, die bewegbare Lagerung der Stützführung und der Ladeführung zu realisieren. Durch die Anordnung der Führungen auf Schwenkarmen können sich diese entsprechend der äußeren Kontur der Informationsplatte verschwenken.

Eine weitere vorteilhafte Ausgestaltung der Erfindung ist dadurch gekennzeichnet, daß die Stützführung und die Ladeführung die Informationsplatte beim Ein- und Ausfahren auf einer im wesentlichen geradlinigen Ladebahn führen.

Durch das geradlinige Einfahren der Informationsplatte wird die erforderliche Breite des Lademechanismus im wesentlichen von der Breite bzw. dem Durchmesser der Informationsplatte bestimmt und das Gehäuse des Lademechanismus kann dementsprechend schmal ausgeführt werden. Dies ist insbesondere im Automobilbereich von großem Vorteil, da dort der Einbauraum begrenzt ist.

Eine weitere vorteilhafte Ausgestaltung der Erfindung ist dadurch gekennzeichnet, daß beide Schwenkarme jeweils in Richtung auf die Ladebahn vorgespannt sind.

Die an den Schwenkarmen angeordnete Stützführung und die Ladeführung drücken infolge der Vorspannung der Schwenkarme gegen den Plattenrand und können so den Plattenrand beim Laden bzw. Entladen der Informationsplatte flexibel führen.

Eine weitere vorteilhafte Ausgestaltung der Erfindung ist dadurch gekennzeichnet, daß die Schwenkarme miteinander gekoppelt sind.

Eine weitere vorteilhafte Ausgestaltung der Erfindung ist dadurch gekennzeichnet, daß die Kopplung der beiden Schwenkarme mittels einer zwischen den beiden Schwenkarmen gespannten Zugfeder realisiert ist.

Eine Zugfeder ist eine konstruktiv einfach zu realisierende Möglichkeit, die freien Enden der Schwenkarme aufeinander zu zu verspannen.

Eine weitere vorteilhafte Ausgestaltung der Erfindung ist dadurch gekennzeichnet, daß die Schwenkarme mittels einer Koppelstange gekoppelt sind und daß wenigstens einer der Schwenkarme in Richtung auf die Mitte der Ladeebene vorgespannt ist.

Die an den Schwenkarmen angeordnete Stützführung und die Ladeführung drücken infolge der Vorspannung von wenigstens einem der Schwenkarme gegen den Plattenrand. Der in Richtung auf die Mitte der Ladeebene vorgespannte Schwenkarm wirkt mittels der Koppelstange derart auf den nicht vorgespannten Schwenkarm ein, daß dieser ebenfalls eine Kraft in Richtung auf die Mitte der Ladeebene erfährt. Selbstverständlich ist es auch möglich, beide Schwenkarme in Richtung auf die Mitte der Ladeebene vorzuspannen.

Eine weitere vorteilhafte Ausgestaltung der Erfindung ist dadurch gekennzeichnet, daß die Koppelstange wenigstens zwei Längsnuten aufweist, in die jeweils ein an dem Schwenkarm angeordneter Schwenkarmstift eingreift und daß die Koppelstange wenigstens einen Koppelstangenstift aufweist, der in eine sich in der geradlinigen Ladebahn erstreckende Gehäusedeckelnut eines Gehäusedeckels eingreift.

Mit dieser Konstruktion wird gewährleistet, daß sich die Koppelstange auf der geradlinigen Ladebahn bewegt. Dadurch verschwenken die beiden Schwenkarme symmetrisch und die Stützführung und die Ladeführung führen die Informationsplatte beim Ein- und Ausfahren auf der geradlinigen Ladebahn.

Eine weitere vorteilhafte Ausgestaltung der Erfindung ist dadurch gekennzeichnet, daß das Transportrad eine Nut aufweist, in der der Plattenrand der Informationsplatte führbar ist. Eine Nut ist eine besonders einfache Möglichkeit, den Plattenrand zu führen.

Eine weitere vorteilhafte Ausgestaltung der Erfindung ist dadurch gekennzeichnet, daß das Transportrad eine Auflagefläche aufweist, auf der eine Seite des Plattenrandes der Informationsplatte aufliegbar ist, daß das Transportrad eine Anschlagkante aufweist, gegen die die Kante des Plattenrandes der Informationsplatte drückbar ist und daß ein Andruckelement vorgesehen ist, das gegen die andere Seite des Plattenrandes der Informationsplatte drückbar ist.

Mit einer derartigen Konstruktion kann eine hohe Haltekraft in einer Richtung senkrecht zu der Ladeebene auf die Plattenoberfläche im Bereich des Plattenrandes der Informationsplatte aufgebracht werden. Dies ist insbesondere in einer Auswurfstellung wichtig, in der die Informationsplatte am weitesten aus dem Gehäuse herausragt und die Informationsplatte nur von der Stützführung und der Ladeführung gehalten werden muß, so daß sie von der Bedienperson entnommen werden kann.

Eine weitere vorteilhafte Ausgestaltung der Erfindung ist dadurch gekennzeichnet, daß die Stützführung eine Auflagefläche aufweist, auf der eine Seite des Plattenrandes der Informationsplatte aufliegbar ist, daß die Stützführung eine Anschlagkante aufweist, gegen die die Kante des Plattenrandes der Informationsplatte drückbar ist und daß ein Andruckelement vorgesehen ist, das gegen die andere Seite des Plattenrandes der Informationsplatte drückbar ist.

Eine weitere vorteilhafte Ausgestaltung der Erfindung ist dadurch gekennzeichnet, daß eine Hilfsführung vorgesehen ist, die in einem mittleren Bereich des Ladevorganges eine zusätzliche Führung für den Plattenrand der Informationsplatte ermöglicht.

Die Hilfsführung verhindert ein Verkippen der Informationsplatte gegenüber der Ladeebene. In einem Endbereich des Ladevorganges ist die Hilfsführung nicht mehr wirksam, so daß die Informationsplatte auf einen Plattenteller abgesenkt werden kann.

Der erfindungsgemäße Lademechanismus kann vorzugsweise in einem Laufwerk, in einem Gerät zum Aufnehmen und/oder Wiedergeben von auf einer Informationsplatte gespeicherten Informationen mit einem Laufwerk sowie in einem Autoradio mit einem Laufwerk verwendet werden.

Einige Ausführungsbeispiele der Erfindung werden nachfolgend anhand der Zeichnung in den Figuren 1 bis 13 näher erläutert. Es zeigen:
Fig. 1 als erstes Ausführungsbeispiel den Lademechanismus eines Gerätes zum Aufnehmen und/oder Wiedergeben von auf einer Informationsplatten gespeicherten Informationen in Draufsicht, wobei der Lademechanismus an Schwenkarmen angeordnete Führungen für die Ränder der Informationsplatte aufweist, und er sich in einer Auswurfstellung befindet, in der die Informationsplatte von den Führungen stabil gehalten wird und von der Hand einer Bedienperson entnommen werden kann.
Fig. 2 den Lademechanismus nach Fig. 1 in einer Zwischenstellung, bei der die Informationsplatte von der Bedienperson bis zu dem Punkt eingeschoben ist, bei dem der Lademechanismus den weiteren Einzug der Informationsplatte selbsttätig übernimmt,
Fig. 3 den Lademechanismus nach Fig. 1 in einer Einrollstellung mit einer in einer ersten Laderichtung vollständig eingerollten Informationsplatte,
Fig. 4 eine Vorderansicht des Lademechanismus gemäß Fig. 3,
Fig. 5 eine perspektivische Ansicht des Lademechanismus mit der Informationsplatte in der Auswurfstellung und der Einrollstellung,
Fig. 6 als zweites Ausführungsbeispiel eine Draufsicht auf den Lademechanismus eines Gerätes zum Aufnehmen und/oder Wiedergeben von auf einer Informationsplatten gespeicherten Informationen, wobei der Lademechanismus sich in der Auswurfstellung befindet und die Schwenkarme mittels einer Koppelstange gekoppelt sind,
Fig. 7 den Lademechanismus nach Fig. 6 in einer Zwischenstellung, bei der die Informationsplatte von der Bedienperson bis zu dem Punkt eingeschoben ist, bei dem der Lademechanismus den weiteren Einzug der Informationsplatte selbsttätig übernimmt,
Fig. 8 den Lademechanismus nach Fig. 6 in einer Einrollstellung mit einer in der ersten Laderichtung vollständig eingerollten Informationsplatte, wobei die an den Schwenkarmen angeordneten Führungen vom Plattenrand weggeschwenkt sind, so daß die Informationsplatte mittels eines nicht dargestellten Absenkmechanismus auf einen Plattenteller abgesenkt werden kann,
Fig. 9 den Lademechanismus gemäß Fig. 8 in Vorderansicht,
Fig. 10 eine perspektivische Ansicht des Lademechanismus mit der Informationsplatte in der Auswurfstellung und der Einrollstellung, wobei eine Stützführung nicht dargestellt ist, um die Ausbildung einer Hilfsführung deutlicher zu zeigen,
Fig. 11 eine Schnittdarstellung eines Transportrades
Fig 12 eine Schittdarstellung einer anderen Ausführungsform des Transportrades,
Fig 13 eine Seitenansicht einer weiteren Ausführungsform des Transportrades.

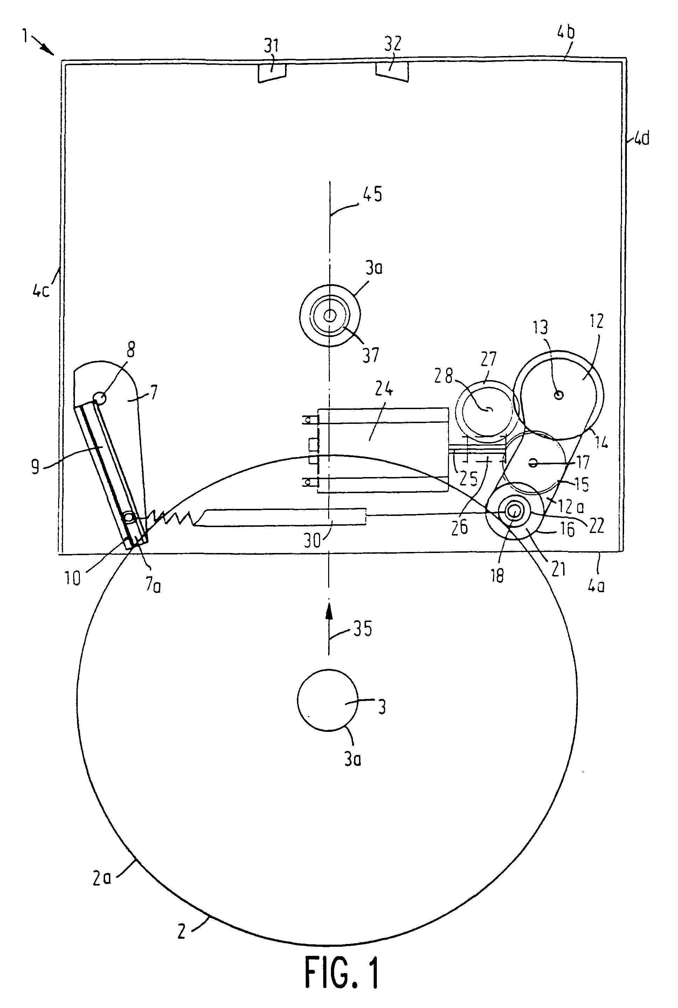

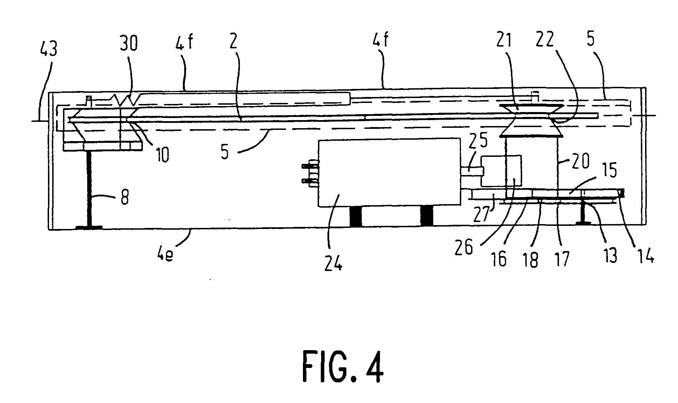

Eine in Fig. 1 dargestellte erste Ausführungsform eines Lademechanismus eines Gerätes zum Aufnehmen und/oder Wiedergeben von Signalen bzw. Informationen ist in einem Gehäuse 1 angeordnet. Der Lademechanismus dient dem Laden bzw. Entladen einer Informationsplatte 2, auf der die Signale bzw. Informationen gespeichert sind. Die Informationsplatte 2 hat einen kreisrunden Rand 2a und weist ein kreisrundes Positionierloch 3 mit einem Rand 3a auf. Das Gehäuse 1 hat eine Vorderwand 4a, eine Rückwand 4b und Seitenwände 4c und 4d. Wie Fig. 4 zeigt, weist das Gehäuse eine Bodenplatte 4e und eine Deckelplatte 4f auf. In der Vorderwand 4a befindet sich ein in Fig. 4 erkennbarer Aufnahmeschlitz 5, durch den die Informationsplatte 2 einschiebbar ist. Wie Fig. 1 zeigt, ist an der Bodenplatte 4e in der Nähe der Seitenwand 4c eine Schwenkachse 8 angeordnet, um die ein erster Schwenkarm 7 verschwenkbar ist. Auf dem Schwenkarm 7 ist eine Stützführung 9 mit einer Nut 10 befestigt. Die Stützführung 9 kann z.B. aus Gummi bestehen. An der Bodenplatte 4e ist in der Nähe der Seitenwand 4d eine weitere Schwenkachse 13 angeordnet, um die ein zweiter Schwenkarm 12 verschwenkbar ist. Auf dem Schwenkarm 12 sind drei miteinander kämmende Zahnräder 14, 15 und 16 angeordnet. Das Zahnrad 14 ist um die Achse 13 drehbar gelagert. Die Zahnräder 15 und 16 sind auf Achsen 17 und 18 gelagert, die auf dem Schwenkarm 12 befestigt sind. An dem Zahnrad 16 ist mittels eines Verbindungssteges 20 als Transportrad eine Gummirolle 21 befestigt. Die Gummirolle 21 weist eine Nut 22 auf. Die Nut 22 der Gummirolle 21 und die Nut 10 der Stützführung 9 verlaufen in einer Ladeebene 43. Die Gummirolle 21 kann auch aus anderem Material bestehen.

Auf der Bodenplatte 4e des Gehäuses 1 ist ein Motor 24 befestigt, dessen Welle 25 eine Schnecke 26 trägt. Der Motor 24 ist in zwei Richtungen antreibbar. Mittels der Schnecke 26 ist ein Zahnrad 27 antreibbar, das um eine an der Bodenplatte 4e angeordnete Achse 28 drehbar gelagert ist. Das Zahnrad 27 ist mit dem Zahnrad 14 in Eingriff. Somit ist die Gummirolle 21 mittels des Motors 24, der Welle 25, der Schnecke 26 und der Zahnräder 27, 14, 15 und 16 in zwei Richtungen antreibbar.

Die freien Enden 7a und 12a des Schwenkarms 7 und des Schwenkarms 12 sind mittels einer Zugfeder 30 verbunden, wodurch auf die freien Enden 7a und 12a der Schwenkarme 7 und 12 eine Kraft in Richtung auf die Mitte des Gehäuses 1 ausgeübt wird.

Ferner sind an der hinteren Wand 4b des Gehäuses 1 in Höhe der Ladeebene 43 noch zwei Anschläge 31 und 32 angeordnet.

Nachfolgend wird das Einführen der Informationsplatte 2 in das Gehäuse 1 anhand der Fig. 1 bis 4 erläutert.

Wenn ein Gerät mit der Informationsplatte 2 beladen werden soll, dann erfaßt eine Bedienperson die Informationsplatte 2 am Rand 3a des Positionierloches 3 und am äußeren Rand 2a der Informationsplatte 2. So gehalten wird die Informationsplatte 2 durch den Schlitz 5 der Vorderwand 4a des Gehäuses 1 in die Nuten 10 und 22 der Stützführung 9 und der Gummirolle 21 gedrückt. Diese Position der Informationsplatte 2 ist in Fig. 1 dargestellt und wird als Auswurfstellung (Eject) bezeichnet. Mit der Hand der Bedienperson wird die Informationsplatte 2 dann in Richtung des Pfeiles 35 um eine in Fig. 1 mit 36 bezeichnete Länge in eine nachfolgend als Zwischenstellung bezeichnete Position geschoben. Diese Länge liegt in der Größenordnung von 40 mm, d.h. bei ca. 1/3 des Durchmessers der Informationsplatte, wobei auch andere Längen möglich sind. Die Informationsplatte 2 wird dabei seitlich auf der einen Seite von der Nut 10 der Stützführung 9 und auf der anderen Seite von der Nut 22 der Gummirolle 21 geführt, und die Oberfläche der Informationsplatte 2 wird von der Hand der Bedienperson nicht berührt. Dabei wird der Schwenkarm 12 um die Schwenkachse 13 und der Schwenkarm 7 um die Schwenkachse 8 verschwenkt. Der Winkel der Verschwenkung wird dabei von der äußeren Kontur der Informationsplatte 2 bestimmt.

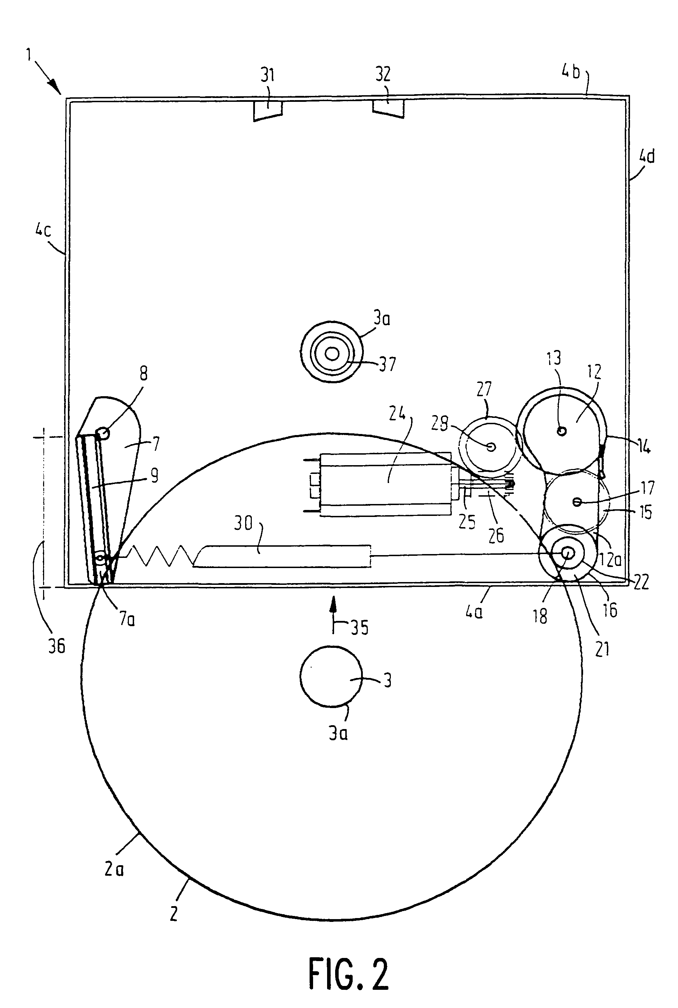

Die Position der Informationsplatte 2 in der Zwischenstellung ist in Fig. 2 dargestellt. In dieser Zwischenstellung ragen ca. 2/3 des Durchmessers der Informationsplatte 2 und damit auch das Positionierloch 3 über die Vorderseite 4a des Gehäuses 1 hinaus nach außen. Die Informationsplatte 2 kann daher auch in dieser Position am Rand 3a des Positionierloches 3 und am äußeren Rand 2a der Informationsplatte 2 von der Hand der Bedienperson gefaßt werden.

Ist die Informationsplatte 2 bis in diese Zwischenstellung von Hand in das Gerät eingebracht worden, so wird der Motor 24 über einen nicht dargestellten Schalter angesteuert und der Lademechanismus führt den weiteren Einzug der Informationsplatte 2 selbsttätig durch.

Als Schalter ist z.B. ein mechanischer Schalter oder ein optischer Schalter (Lichtschranke) einsetzbar. Es ist auch möglich, daß der Motor bereits früher eingeschaltet wird.

Der Motor beginnt sich nun derart zu drehen, daß er mittels der Welle 25, der Schnecke 26, der Zahnräder 27, 14, 15 und 16 die Gummirolle 21 im Uhrzeigersinn antreibt. Die im Uhrzeigersinn drehende Gummirolle 21 übt dabei auf den Rand der Informationsplatte 2 eine tangentiale Kraft aus, infolge derer die Informationsplatte 2 unter Abstützung zwischen der Stützführung 9 und der Gummirolle 21 nun selbsttätig auf einer geradlinigen Ladebahn 45 in das Gehäuse eingerollt wird. Dabei wird der Schwenkarm 12 um die Schwenkachse 13 und der Schwenkarm 7 um die Schwenkachse 8 verschwenkt.

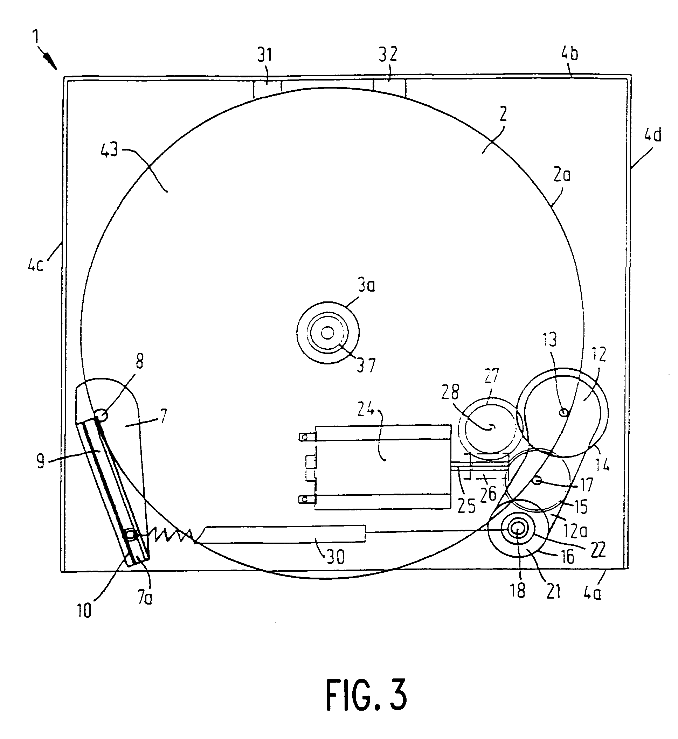

Der Einrollvorgang wird dadurch beendet, daß der Rand der Informationsplatte 2 gegen die beiden an der Rückwand 4b des Gehäuses 1 angeordneten Anschläge 31 und 32 stößt. Diese Position der Informationsplatte 2 ist in Fig. 3 gezeigt und wird nachfolgend als Einrollstellung bezeichnet. Der Motor 24 wird nun mittels eines nicht dargestelltes Schalters ausgeschaltet. Als Schalter ist z.B. wieder ein mechanischer Schalter oder ein optischer Schalter (Lichtschranke) einsetzbar.

Damit ist der selbsttätige Einrollvorgang der Informationsplatte beendet und es kann ein Ladepositioniervorgang einsetzen, bei welchem sich die Informationsplatte 2 mit ihrem Positionierloch 3 auf Halterungen 37 eines nicht dargestellten Plattentellers absenkt. Dort wird die Informationsplatte 2 mittels einer nicht näher dargestellten Klemmvorrichtung auf dem Plattenteller festgeklemmt und die Informationsplatte 2 befindet sich in einer nicht dargestellten, nachfolgend als Spielstellung bezeichneten Position. Für den Ladepositioniervorgang ist der in der EP 273 510 ausführlich beschriebene Vorgang verwendbar; es sind jedoch auch abweichende Ladepositioniervorgänge möglich.

Der Auswerfvorgang läuft nun wie folgt ab. Zunächst wird die Informationsplatte 2 mittels des Ladepositioniermechanismus von der Spielstellung in die Einrollstellung gehoben.

Der Motor 24 wird nun eingeschaltet und beginnt sich derart zu drehen, daß er die Gummirolle 21 im Gegenuhrzeigersinn antreibt. Die im Gegenuhrzeigersinn drehende Gummirolle 21 übt auf den Rand 2a der Informationsplatte 2 eine tangentiale Kraft aus, infolge derer die Informationsplatte 2 unter Abstützung zwischen der Stützführung 9 und der Gummirolle 21 nun selbsttätig auf der geradlinigen Ladebahn 45 aus dem Gehäuse herausgerollt wird. Die Informationsplatte 2 wird dabei wieder seitlich auf der einen Seite von der Nut 10 der Stützführung 9 und auf der anderen Seite von der Nut 22 der Gummirolle 21 geführt und der Schwenkarm 12 um die Schwenkachse 13 sowie der Schwenkarm 7 um die Schwenkachse 8 verschwenkt. Die Informationsplatte 2 wird nun selbstätig bis in die in Fig 1 gezeigte Auswurfstellung ausgefahren und der Motor 24 von dem nicht dargestellten Schalter ausgeschaltet.

Die Informationsplatte 2 wird nun in dieser Auswurfstellung von der Gummirolle 21 und der Stützführung 9 stabil gehalten, ohne daß die Informationsplatte 2 selbsttätig aus dem Gehäuse 1 herausrollt. In dieser Auswurfstellung kann die Informationsplatte 2 am Rand 3a des Positionierloches 3 und am äußeren Rand 2a der Informationsplatte 2 von der Hand der Bedienperson entnommen werden.

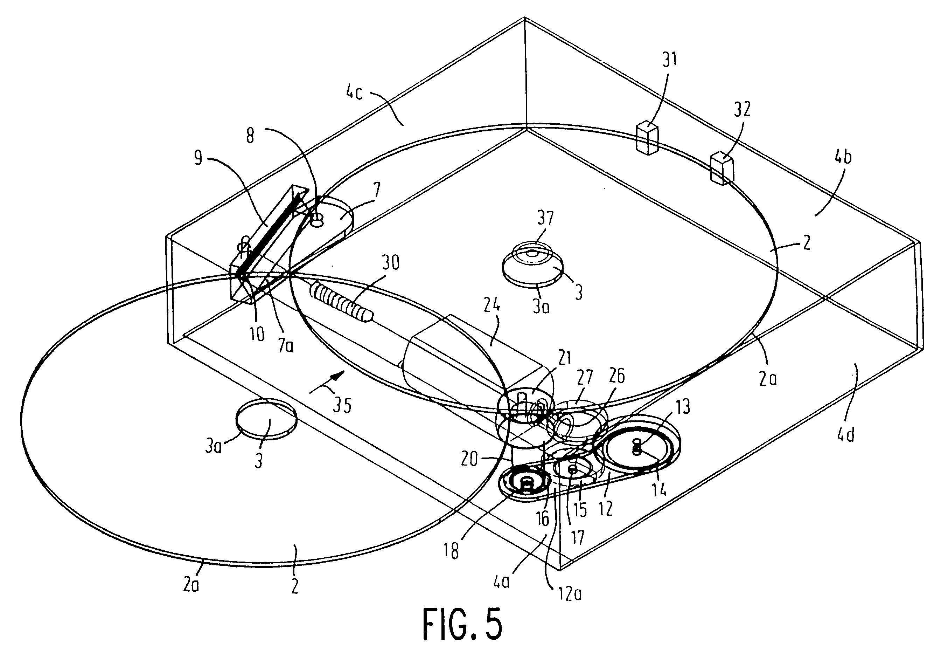

Fig. 5 zeigt den Lademechanismus in perspektivischer Ansicht mit der Informationsplatte 2 in der Auswurfstellung und der Einrollstellung.

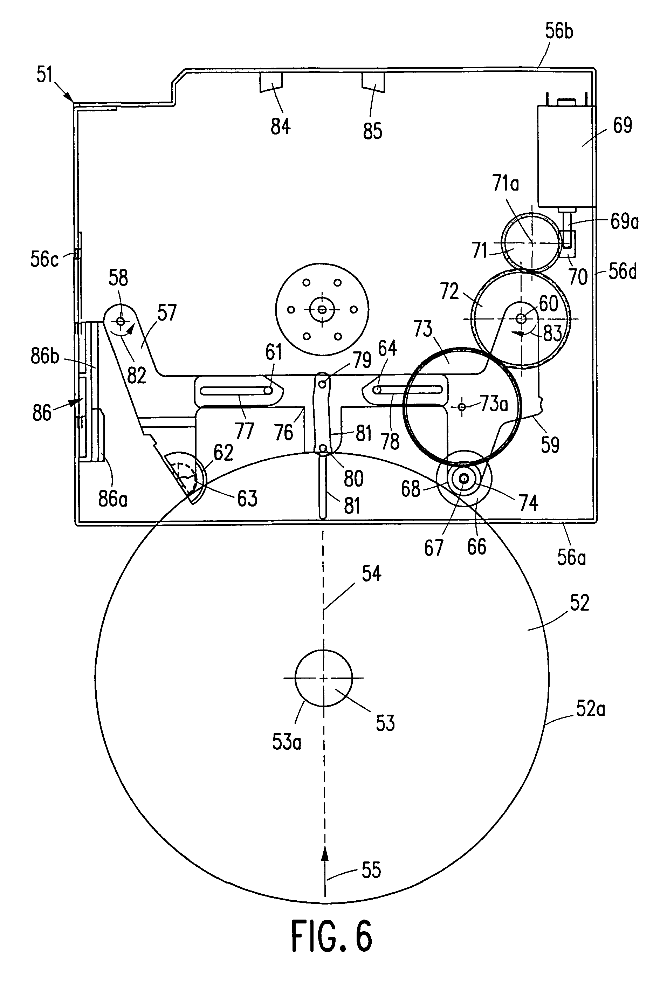

Fig. 6 zeigt eine zweite Ausführungsform eines erfindungsgemäßen Lademechanismus in der Auswurfstellung. Der in Fig. 6 dargestellte Lademechanismus ist in einem Gehäuse 51 angeordnet. Der Lademechanismus dient dem Einfahren einer Informationsplatte 52 auf einer geradlinigen Ladebahn 54 in einer ersten Laderichtung 55 in das Gehäuse 1 bzw. dem Ausfahren der Informationsplatte 2 auf der geradlinigen Ladebahn 54 entgegen der ersten Laderichtung 55. Die Informationsplatte 52 hat einen kreisrunden Rand 52a und weist ein kreisrundes Positionierloch 53 mit einem Rand 53a auf. Das Gehäuse 51 weist eine Vorderwand 56a, eine Rückwand 56b, Seitenwände 56c und 56d sowie eine Bodenplatte 56e und einen Gehäusedeckel 56f auf.
Auf der Bodenplatte 56e ist in Nähe der Seitenwand 56c ein erster Schwenkarm 57 um eine Schwenkachse 58 verschwenkbar angelagert. An der Bodenplatte 56e ist in Nähe der Seitenwand 56d ein zweiter Schwenkarm 59 um eine Achse 60 verschwenkbar angelagert. An dem ersten Schwenkarm 57 ist ein Schwenkarmstift 61 sowie eine eine Nut 63 aufweisende Stützführung 62 befestigt. An dem zweiten Schwenkarm 59 ist ein Schwenkarmstift 64 befestigt. An dem zweiten Schwenkarm 59 ist ein Transportrad 66 drehbar um eine Drehachse 67 angeordnet. Das Transportrad 66 weist eine Nut 68 auf. Auf der Bodenplatte 56e des Gehäuses 51 ist ein Motor 69 befestigt, dessen Welle 69a eine Schnecke 70 trägt. Der Motor 69 ist in zwei Richtungen antreibbar. Mittels der Schnecke 70 ist ein Zahnrad 71 antreibbar, das um eine an der Bodenplatte 56e angeordnete Achse 71a drehbar gelagert ist. Das Zahnrad 71 kämmt mit einem Zahnrad 72, das um die Schwenkachse 60 des zweiten Schwenkarmes 59 drehbar gelagert ist. Das zweite Zahnrad 72 kämmt mit einem dritten Zahnrad 73, das um eine Achse 73a drehbar an dem zweiten Schwenkarm 59 angelagert ist. Das dritte Zahnrad 73 kämmt mit einem an dem Transportrad 66 angeordneten Zahnkranz 74. Somit ist das Transportrad 66 mittels des Motors 69, der Motorwelle 69a, der Schnecke 70, des ersten Zahnrades 71, des zweiten Zahnrades 72 und der dritten Zahnrades 73 in zwei Richtungen antreibbar.

Es ist eine T-förmig ausgebildete Koppelstange 76 vorgesehen, welche eine senkrecht zu der ersten Laderichtung 55 verlaufende erste Koppelstangennut 77, eine senkrecht zu der ersten Laderichtung 55 verlaufende zweite Koppelstangennut 78 sowie einen ersten Koppelstangenstift 79 und einen zweiten Koppelstangenstift 80 aufweist. Der erste Koppelstangenstift 79 und der zweite Koppelstangenstift 80 greifen in eine sich in der ersten Laderichtung 55 erstreckende Gehäusedeckelnut 81 des Gehäusedeckels 56f ein. In die erste Koppelstangennut 77 greift der Schwenkarmstift 61 des ersten Schwenkarmes 57, und in die zweite Koppelstangennut 78 greift der Schwenkarmstift 64 des zweiten Schwenkarmes 59 ein.

Der erste Schwenkarm 57 ist mittels einer nicht dargestellten Feder in Richtung des Pfeiles 82 um die Schwenkachse 58 vorgespannt. Der zweite Schwenkarm 59 ist in Richtung des Pfeiles 83 um die Schwenkachse 60 mittels einer nicht dargestellten Feder vorgespannt. Es ist auch möglich, daß nur einer der beiden Schwenkarme vorgespannt ist.

An der hinteren Wand 56b des Gehäuses 51 sind zwei Anschläge 84 und 85 angeordnet.

An der Seitenwand 56c des Gehäuses 51 ist eine Hilfsführung 86 angeordnet. Diese Hilfsführung 86 weist eine sich in einer Ladeebene 75 erstreckende untere Auflagefläche 86a sowie eine sich in der Ladeebene 75 erstreckende obere Führungsfläche 86b auf. Die obere Führungsfläche 86b ist in der ersten Laderichtung 55 länger ausgebildet als die untere Auflagefläche 86a.

In der in Fig. 6 gezeigten Auswurfstellung ist die Informationsplatte 52 von der Hand der Bedienperson mit der Nut 63 der Stützführung 62 und der Nut 68 des Transportrades 66 in Eingriff gebracht worden. Hierzu erfaßt die Bedienperson die Informationsplatte 52 am Rand 52a der Informationsplatte 52 sowie am Rand 53a des Positionierloches 53. So gehalten wird die Informationsplatte 52 von der in Fig. 1 dargestellten Auswurfstellung in die in Fig. 2 dargestellte Zwischenstellung überführt. Bei diesem Überführen von der in Fig. 1 dargestellten Auswurfstellung in die in Fig. 2 dargestellte Zwischenstellung wird der erste Schwenkarm 57 um die Schwenkachse 58 und der zweite Schwenkarm 59 um die Schwenkachse 60 verschwenkt. Die hierzu erforderliche Verschwenkkraft wird von der Bedienperson aufgebracht. Die Informationsplatte 52 wird dabei seitlich auf der einen Seite von der Nut 63 der Stützführung 62 und auf der anderen Seite von der Nut 68 des Transportrades 66 geführt. Die Oberfläche der Informationsplatte 52 wird von der Hand der Bedienperson nicht berührt.

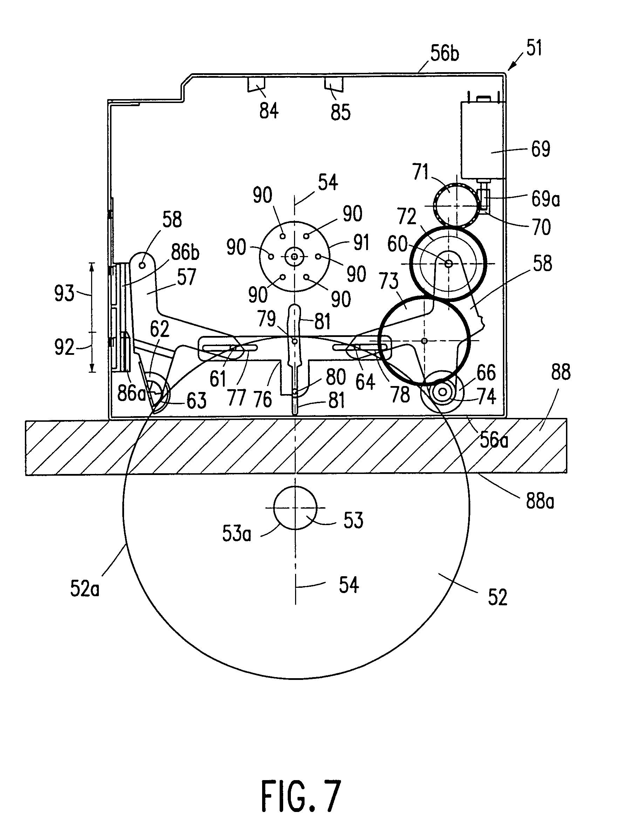

In der in der Fig. 7 dargestellten Zwischenstellung des Lademechanismus ragen ca. 2/3 des Durchmessers der Informationsplatte 52 über die Vorderseite 56a des Gehäuses 51 des Lademechanismus hinaus nach außen. Wie in Fig. 7 erkennbar, ist es möglich, an der Vorderwand 56a des Gehäuses 51 eine Bedienfront 88 anzuordnen. Diese Bedienfront 88 könnte z.B. die Bedienfront eines Autoradios sein, in das ein Gerät zum Aufnehmen und/oder Wiedergeben von auf der Informationsplatte 52 gespeicherten Informationen integriert ist. Das Positionierloch 53 der Informationsplatte 52 ragt über die Vorderseite 88a der Bedienfront 88 hinaus nach außen. Die Informationsplatte 52 kann daher auch in dieser Zwischenstellung am Rand 53a des Positionierloches 53 und am Rand 52a der Informationsplatte 52 von der Hand der Bedienperson gefaßt werden.

Ist die Informationsplatte 52 bis in diese Zwischenstellung von der Hand der Bedienperson in das Gehäuse 51 eingebracht worden, so wird der Motor 69 über einen nicht dargestellten Schalter angesteuert, und der Lademechanismus führt den weiteren Ladevorgang selbsttätig durch.

Als Schalter ist z.B. ein mechanischer Schalter oder ein optischer Schalter (Lichtschranke) einsetzbar. Es ist auch möglich, daß der Motor bereits früher eingeschaltet wird.

Der Motor 69 beginnt sich nun derart zu drehen, daß er mittels der Motorwelle 69a, der Schnecke 70, des ersten Zahnrades 71, des zweiten Zahnrades 72 und des dritten Zahnrades 73 das Transportrad 66 im Uhrzeigersinn antreibt. Das im Uhrzeigersinn drehende Transportrad 66 übt dabei auf den Rand 52a der Informationsplatte 52 eine tangentiale Kraft aus, infolge derer die Informationsplatte 52 unter Abstützung zwischen der Stützführung 62 und dem Transportrad 66 selbsttätig auf der geradlinigen Ladebahn 54 in das Gehäuse 51 eingerollt wird. Dabei wird der erste Schwenkarm 57 um die Schwenkachse 58 und der zweite Schwenkarm 59 um die Schwenkachse 60 verschwenkt.

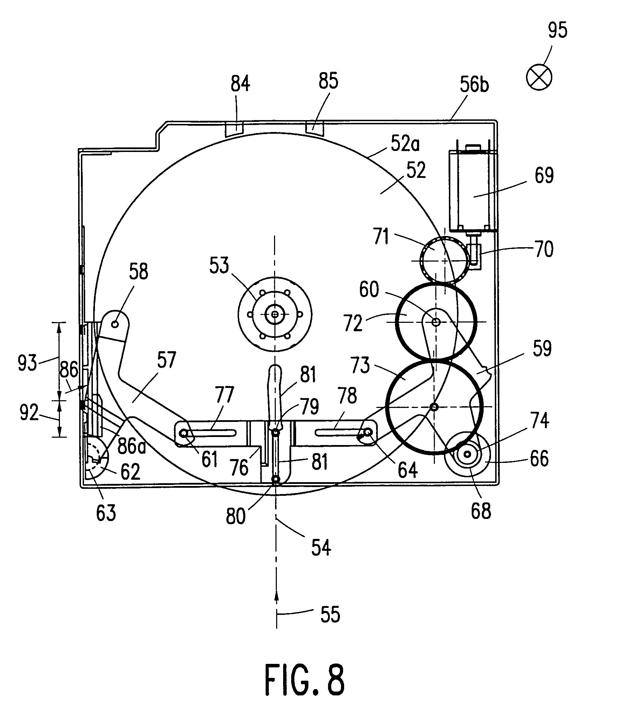

In Fig. 8 befindet sich der Lademechanismus in einer Einrollstellung, in der die Informationsplatte 52 in der ersten Laderichtung 55 bis gegen die Anschläge 84 und 85 eingerollt worden ist. Die Schwenkarme 57 und 59 sind mit dem Transportrad 66 und der Stützführung 62 vom Plattenrand 52a weggeschwenkt und die untere Auflagefläche 86a der Hilfsführung 86 wirkt nicht mehr auf die Informationsplatte 52 ein, so daß diese mittels eines nicht dargestellten Absenkmechanismus mit ihrem Positionierloch 53 auf eine Klemmvorrichtung 90 eines in Fig. 8 angedeuteten Plattentellers 91 in eine nicht näher dargestellte Spielstellung abgesenkt werden kann. In dieser nicht näher dargestellten Spielstellung kann die Informationsplatte 52 mittels des Plattentellers 91, der von einer nicht dargestellten Antriebsvorrichtung antreibbar ist, gedreht werden, und die auf der Informationsplatte 52 gespeicherten Informationen, z.B. Musikinformationen, können wiedergegeben werden.

Nachfolgend wird der Übergang von der in Fig. 7 dargestellten Zwischenstellung in die in Fig. 8 dargestellte Einrollstellung näher beschrieben:

Das im Uhrzeigersinn drehende Transportrad 66 übt auf den Rand 52a der Informationsplatte 52 einen tangentiale Kraft auf, infolge derer die Informationsplatte 52 unter Abstützung zwischen der Stützführung 62 und dem Transportrad 66 auf der geradlinigen Ladebahn 54 in der ersten Laderichtung 55 in das Gehäuse 51 eingerollt wird. Bei dem Übergang von der Zwischenstellung in die Spielstellung wird der Rand 52a der Informationsplatte 52 teilweise von der Hilfsführung 86 geführt, die als dritte Führung zusätzlich zu der Stützführung 62 und dem als Ladeführung fungierenden Transportrad 66 eine bessere Führung der Informationsplatte 52 gewährleistet. Dabei wird der Rand der Informationsplatte 52 in einem in den Fig. 7 und 8 gekennzeichnetem ersten Abschnitt 92 der Hilfsführung 86 sowohl von der unteren Auflagefläche 86a der Hilfsführung 86 als auch von der oberen Führungsfläche 86b der Hilfsführung 86 geführt. In einem zweiten Abschnitt 93 der Hilfsführung 86 wird die Informationsplatte 52 nur von der oberen Führungsfläche 86b der Hilfsführung 86 geführt. Bei dem Einrollen der Informationsplatte 52 in der ersten Laderichtung 55 wird das Einrollen auf der geradlinigen Ladebahn 54 dadurch gewährleistet, daß der erste Koppelstangenstift 79 und der zweite Koppelstangenstift 80 in der Gehäusedeckelnut 81 in der ersten Laderichtung 55 geführt werden. Der Ladevorgang in der ersten Laderichtung 55 wird dadurch beendet, daß die Informationsplatte 52 gegen die an der Rückwand 56b des Gehäuses 51 angeordneten Anschläge 84 und 85 gedrückt wird. Ist die Informationsplatte 52 in der ersten Laderichtung 55 bis gegen die Anschläge 84 und 85 eingerollt worden, so wird auf nicht näher dargestellte Weise ein nicht näher dargestellter Antriebsmechanismus eingeschaltet, der auf den ersten Schwenkarm 57 derart einwirkt, daß dieser sich im Uhrzeigersinn um die Schwenkachse 58 verschwenkt, und der auf den zweiten Schwenkarm 59 derart einwirkt, daß dieser sich um die Schwenkachse 60 entgegen dem Uhrzeigersinn verschwenkt. Dadurch wird die Nut 68 des Transportrades 66 und die Nut 63 der Stützführung 62 außer Eingriff mit dem Rand 52a der Informationsplatte 52 gebracht. In dieser Position wird die Informationsplatte 52 auch von der unteren Auflagefläche 86a der Hilfsführung 86 nicht mehr geführt. Dadurch wird es möglich, daß die Informationsplatte 52 auf nicht näher dargestellte Weise von einem nicht näher dargestellten Absenkmechanismus in einer zweiten Laderichtung 95, die senkrecht zu der Ladeebene 75 verläuft, auf die Klemmvorrichtung 90 des Plattentellers 91 abgesenkt wird. Der Entladevorgang läuft genau umgekehrt zu dem Ladevorgang ab.

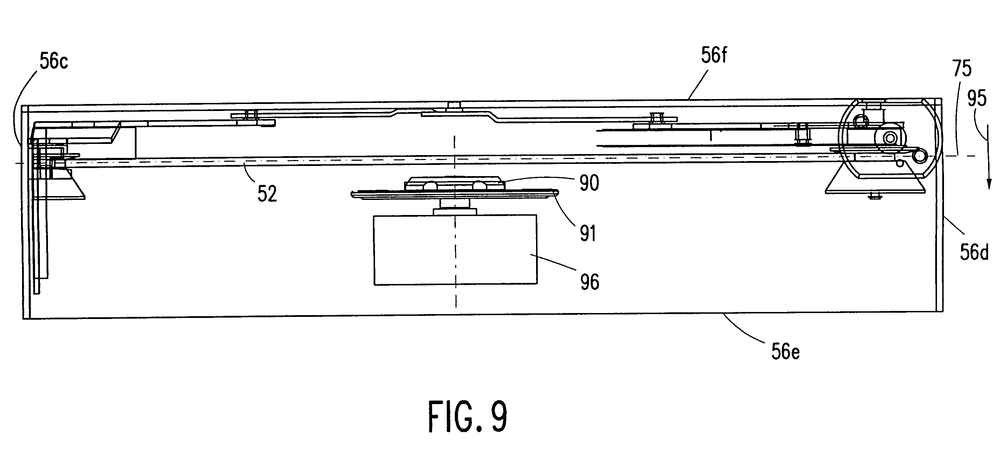

Fig. 9 zeigt den Lademechanismus in der Einrollstellung gemäß Fig. 8 in Vorderansicht in Richtung auf die Vorderwand 56a des Gehäuses 51. Der Plattenteller 91 ist mittels eines Plattenantriebsmotors 96 antreibbar, und somit kann auch die Informationsplatte 52, wenn sie in der zweiten Laderichtung 95 auf die Klemmvorrichtung 90 des Plattentellers 91 mit ihrem Positionierloch 53 aufgeklemmt worden ist, mittels des Plattenantriebsmotors 96 gedreht werden.

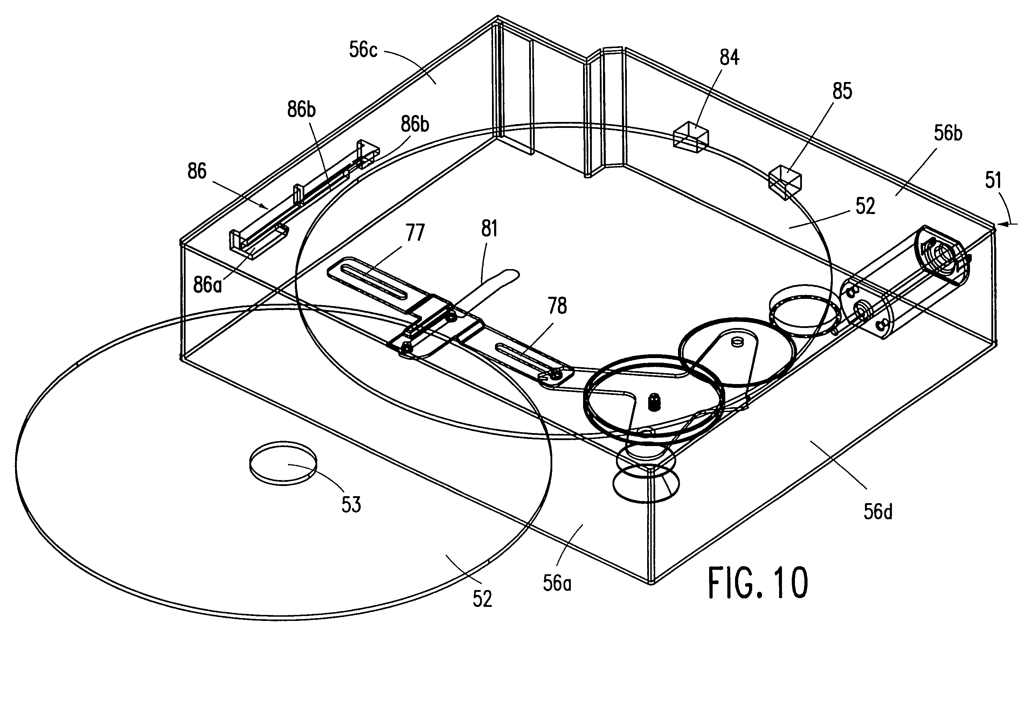

Fig. 10 zeigt den Lademechanismus schematisch in perspektivischer Ansicht mit der Informationsplatte 52 in der Auswurfstellung und der Einrollstellung.
Der erste Schwenkarm 57 ist nicht dargestellt, um die Ausbildung der Hilfsführung 86 mit der unteren Auflagefläche 86a und der oberen Führungsfläche 86b deutlicher zu zeigen.

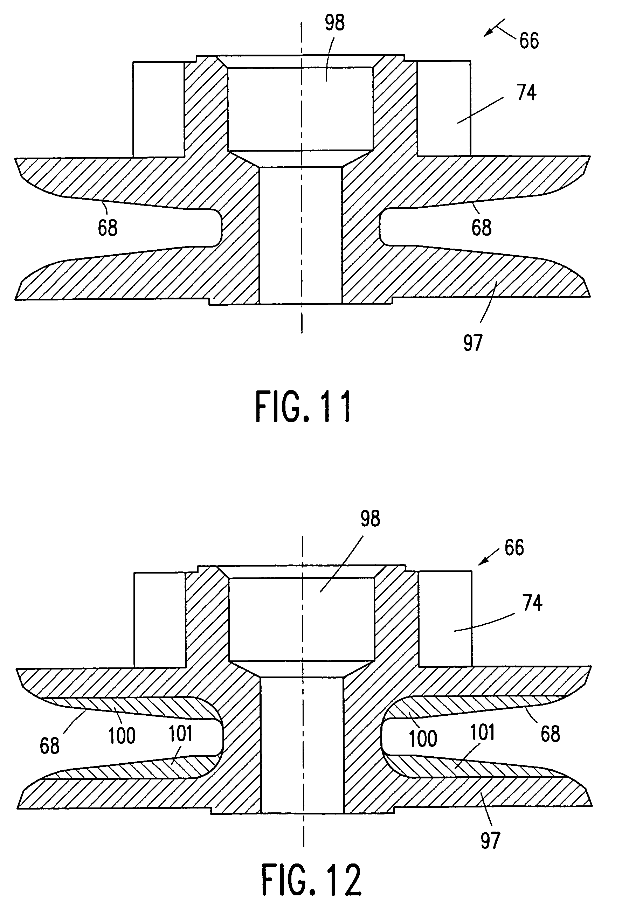

Fig. 11 zeigt eine Schnittdarstellung einer möglichen Ausführungsform des Transportrades 66. Das Transportrad 66 weist einen Gummikörper 97 auf, in dem sich die Nut 68 des Transportrades 66 befindet. Der Gummikörper 97 umschließt eine Achse 98, die z.B. aus Metall oder Kunststoff bestehen kann. Der Gummikörper 97 weist ferner einen Zahnkranz 74 auf, der z.B. auf den Gummikörper 97 aufgepreßt ist oder z.B. mit der Achse 98 fest verbunden ist, so daß das Tranportrad 66 mittels eines in Fig. 11 nicht dargestellten Zahnrades, welches mit dem Zahnkranz 74 kämmt, gedreht werden kann.

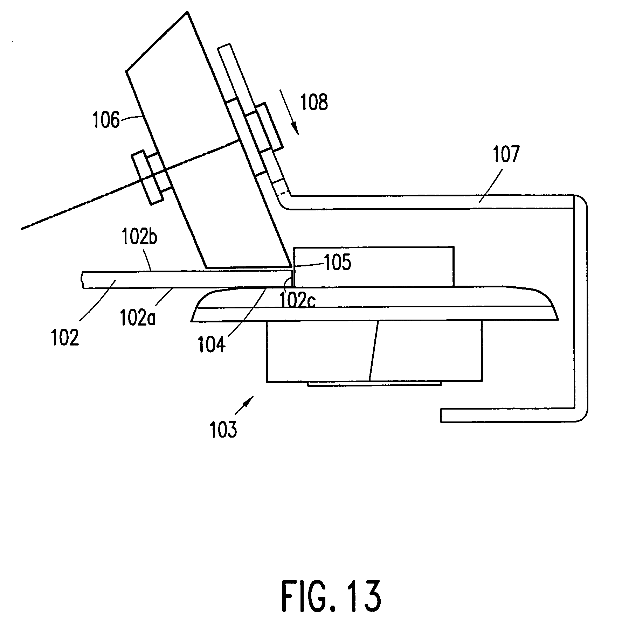

Fig. 12 zeigt eine etwas andere Ausbildung des Transportrades 66 gemäß Fig. 11. Der Gummikörper 97 des Transportrades 66 weist an den der Nut 68 zugewandten Seiten zwei mit Öl gefüllte Ölkammern 100 und 101 auf.

Wird eine in Fig. 12 nicht dargestellte Informationsplatte in die Nuten 68 eingebracht, so können sich die Ölkammern 100 und 101 des Gummikörpers 97 an den Plattenrand anlegen. Dadurch sind höhere Übertragungskräfte zum Halten der Informationsplatte möglich.

Fig. 13 zeigt ein Transportrad 103, welches eine Auflagefläche 104 aufweist, auf der die Oberflächenseite 102a einer Informationsplatte 102 aufliegt. Das Transportrad 103 weist eine Anschlagkante 105 auf, gegen welche der Rand 102c der Informationsplatte 102 drückt. Es ist ein Andruckelement 106 vorgesehen, welches auf einem Bügel 107 in Richtung des Pfeiles 108 verschiebbar angelagert ist. Der Bügel 107 ist auf dem Schwenkarm 59 drehbar gelagert. Das Andruckelement 106 ist in Richtung des Pfeiles 108 gegenüber dem Bügel 107 vorgespannt. Infolge dieser Vorspannung, die z.B mittels einer nicht dargestellten Feder realisiert werden kann, drückt das Andruckelement 106 mit einer Andruckfläche 106a gegen die Oberflächenseite 102b der Informationsplatte 102.

Mit einer derartigen Konstrukton kann auf die Informationsplatte 102 eine größere Klemmkraft aufgebracht werden als dies mit einer gemäß den Fig. 11 und 12 ausgebildeten Nut 68 des Transportrades 66 möglich ist. Eine derartige höhere Klemmkraft ist insbesondere in der Auswurfstellung wichtig. Es ist selbstverständlich auch möglich, die Stützführung 62 gemäß der in Fig. 13 dargestellten Konstruktion auszubilden.

## Patentansprüche

1. Lademechanismus für ein Gerät zum Speichern von Informationen auf einer Informationsplatte (2, 52) und/oder zum Wiedergeben von auf einer Informationsplatte (2, 52) gespeicherten Informationen, welcher Führungen für den Plattenrand (2a, 52a) aufweist, von denen eine Stützführung (9, 62) als ein Stützlager für den gegen sie gedrückten Plattenrand ausgebildet ist und eine Ladeführung (21, 66) als ein drehend antreibbares Transportrad (21, 66) ausgebildet ist, das die Informationsplatte (2, 52) zum Laden in das Gerät hineinrollt bzw. zum Entladen aus diesem herausrollt, wobei die Stützführung (9, 62) und die Ladeführung (21, 66) die Informationsplatte (2) auf einer Ladebahn (45, 54) führen und wobei die Stützführung (9, 62) und die Ladeführung (21, 66) in einer Ladeebene (43, 75) bewegbar gelagert sind,
**dadurch gekennzeichnet,**
**dass** die Stützführung (9, 62) als ein auf einem Schwenkarm (7, 57) nicht drehbar befestigtes Stützlager für den gegen sie gedrückten Plattenrand (2a, 52a) ausgebildet ist

2. Lademechanismus nach Anspruch 1, **dadurch gekennzeichnet, dass** die Stützführung (9, 62) und die Ladeführung (21, 66) an einseitig gelagerten Schwenkarmen (7; 12; 57, 59) angeordnet sind.

3. Lademechanismus nach einem der Ansprüche 1 oder 2, **dadurch gekennzeichnet, dass** die Stützführung (9, 62) und die Ladeführung (21, 66) die Informationsplatte (2, 52) beim Ein- und Ausfahren auf einer im wesentlichen geradlinigen Ladebahn (45, 54) führen.

4. Lademechanismus nach Anspruch 2 oder 3, **dadurch gekennzeichnet, dass** beide Schwenkarme (7, 12; 57, 59) jeweils in Richtung auf die Ladebahn (45, 54) vorgespannt sind.

5. Lademechanismus nach einem der Ansprüche 1 bis 3, **dadurch gekennzeichnet, dass** die Schwenkarme (7, 12; 57, 59) miteinander gekoppelt sind.

6. Lademechanismus nach Anspruch 5, **dadurch gekennzeichnet, dass** die Kopplung der beiden Schwenkarme (7, 12) mittels einer zwischen den beiden Schwenkarmen (7, 12) gespannten Zugfeder (30) realisiert ist.

7. Lademechanismus nach Anspruch 6, **dadurch gekennzeichnet, dass** die Schwenkarme (57, 59) mittels einer Koppelstange (76) gekoppelt sind und dass wenigstens einer der Schwenkarme (57, 59) in Richtung auf die Mitte der Ladeebene (75) vorgespannt ist.

8. Lademechanismus nach Anspruch 7, **dadurch gekennzeichnet, dass** die Koppelstange (76) wenigstens zwei Längsnuten (77, 78) aufweist, in die jeweils ein an dem Schwenkarm (57, 59) angeordneter Schwenkarmstift (61, 64) eingreift und dass die Koppelstange (76) wenigstens einen Koppelstangenstift (79, 80) aufweist, der in eine sich in der geradlinigen Laderichtung (54) erstreckende Gehäusedeckelnut (81) eines Gehäusedeckels (56f) eingreift.

9. Lademechanismus nach einem der Ansprüche 1 bis 8, **dadurch gekennzeichnet, dass** das Transportrad (21, 66) eine Nut (22, 68) aufweist, in der der Plattenrand (2a, 52a) der Informationsplatte (2, 52) führbar ist.

10. Lademechanismus nach einem der Ansprüche 1 bis 9, **dadurch gekennzeichnet, dass** die Stützführung (9, 62) eine Nut (10, 63) aufweist, in der der Plattenrand (2a, 52a) der Informationsplatte (2, 52) führbar ist.

11. Lademechanismus nach einem der Ansprüche 1 bis 8, **dadurch gekennzeichnet, dass** das Transportrad (21, 66, 103) eine Auflagefläche (104) aufweist, auf der eine Seite (102a) des Plattenrandes der Informationsplatte (102) aufliegbar ist, dass das Transportrad (22, 66, 103) eine Anschlagkante (105) aufweist, gegen die die Kante (102c) des Plattenrandes der Informationsplatte (102) drückbar ist und dass ein Andruckelement (106) vorgesehen ist, das gegen die andere Seite (102b) des Plattenrandes der Informationsplatte (102) drückbar ist.

12. Lademechanismus nach einem der Ansprüche 1 bis 8, **dadurch gekennzeichnet, dass** die Stützführung (9, 62) eine Auflagefläche (104) aufweist, auf der eine Seite (102a) des Plattenrandes der Informationsplatte (102) aufliegbar ist, dass die Stützführung (9, 62) eine Anschlagkante (105) aufweist, gegen die die Kante (102c) des Plattenrandes der Informationsplatte (102) drückbar ist und dass ein Andruckelement (106) vorgesehen ist, das gegen die andere Seite (102b) des Plattenrandes der Informationsplatte (102) drückbar ist.

13. Lademechanismus nach einem der Ansprüche 1 bis 12, **dadurch gekennzeichnet, dass** eine Hilfsführung (86) vorgesehen ist, die in einem mittleren Bereich des Ladevorganges eine zusätzliche Führung für den Plattenrand (2a, 52a) der Informationsplatte (2, 52) ermöglicht.

14. Lademechanismus nach einem der Ansprüche 1 bis 13, **dadurch gekennzeichnet, daß** die Stützführung (9, 62) und die Ladeführung (21, 66) in einer Auswurfposition gegen den Plattenrand (2a, 52a) drücken und die Informationsplatte (2, 52) in dieser Auswurfposition stabil halten, so daß ein selbsttätiges Herausrollen der Informationsplatte (2, 52) aus dem Gerät verhindert wird und die Informationsplatte (2, 52) von der Bedienperson in der Auswurfposition entnommen werden kann.

15. Lademechanismus nach einem der Ansprüche 1 bis 14, **dadurch gekennzeichnet, dass** ein Positionierloch (3, 53) der Informationsplatte (2, 52) in einer Zwischenstellung, in die die Informationsplatte (2, 52) von der Bedienperson eingeschoben wird und von der ab der Lademechanismus die Informationsplatte (2, 52) selbsttätig einrollt, über die Vorderseite (4a, 56a) des Gehäuses (1, 51) des Gerätes hinaus nach Außen ragt, wodurch es der Bedienperson ermöglicht wird, die Informationsplatte (2, 52) derart von Hand in die Zwischenstellung einzubringen, dass diese von der Hand der Bedienperson nur am inneren Rand (3a, 53a) des Positionierloches (3, 53) der Informationsplatte (2, 52) und am äußeren Rand (2a, 52a) der Informationsplatte berührt wird.

16. Laufwerk mit einem Lademechanismus nach einem der Ansprüche 1 bis 15.

17. Gerät zum Aufnehmen und/oder Wiedergeben von auf einer Informationsplatte gespeicherten Informationen mit einem Laufwerk nach Anspruch 16.

18. Autoradio mit einem Laufwerk nach Anspruch 16.

## Claims

1. A loading mechanism for an apparatus for storing information on an information disc (2, 52) and/or for reproducing information stored on an information disc (2, 52), which mechanism comprises guides for the disc edge (2a, 52a), of which guides a supporting guide (9, 62) is constructed as a supporting surface for the disc edge pressed against it and a loading guide (21, 66) is constructed as a rotationally drivable transport wheel (21, 66) which rolls the information disc (2, 52) into and out of the apparatus for the purpose of loading and unloading, respectively, the supporting guide (9, 62) and the loading guide (21, 66) guiding the information disc (2) along a loading path (45, 54), and the supporting guide (9, 62) and the loading guide (21, 66) being supported so as to be movable in a loading plane (43, 75), **characterized in that** the supporting guide (9, 62) is constructed as a supporting surface for the disc edge (2a, 52a) pressed against said surface that is immovably fastened on a pivotal arm (7, 57).

2. A loading mechanism as claimed in Claim 1, **characterized in that** the supporting guide (9, 62) and the loading guide (21, 66) are carried by pivotal arms (7; 12; 57, 59) which are supported at one end.

3. A loading mechanism as claimed in Claim 1 or 2, **characterized in that** the supporting guide (9, 62) and the loading guide (21, 66) guide the information disc (2, 52) along a substantially rectilinear loading path (45, 54) during loading and unloading.

4. A loading mechanism as claimed in Claim 2 or 3, **characterized in that** the two pivotal arms (7, 12; 57, 59) are each pretensioned towards the loading path (45, 54).

5. A loading mechanism as claimed in any one of the Claims 1 to 3, **characterized in that** the pivotal arms (7, 12; 57, 59) are coupled to one another.

6. A loading mechanism as claimed in Claim 5, **characterized in that** the two pivotal arms (7, 12) are coupled by means of a tension spring (30) acting between the two pivotal arms (7, 12).

7. A loading mechanism as claimed in Claim 6, **characterized in that** the pivotal arms (57, 59) are coupled by means of a coupling rod (76), and **in that** at least one of the pivotal arms (57, 59) is pretensioned towards the center of the loading plane (75).

8. A loading mechanism as claimed in Claim 7, **characterized in that** the coupling rod (76) has at least two longitudinal grooves (77, 78) which are each engaged by a pivotal-arm pin (61, 64) mounted on the pivotal arm (57, 59), and **in that** the coupling rod (76) has at least one coupling-rod pin (79, 80) which engages a housing-cover groove (81) which extends in a housing cover (56f) in the direction of the rectilinear loading path (54).

9. A loading mechanism as claimed in any one of the Claims 1 to 8, **characterized in that** the transport wheel (21, 66) has a groove (22, 68) in which the disc edge (2a, 52a) of the information disc (2, 52) is engageable.

10. A loading mechanism as claimed in any one of the Claims 1 to 9, **characterized in that** the supporting guide (9, 62) has a groove (10, 63) in which the disc edge (2a, 52a) of the information disc (2, 52) is engageable.

11. A loading mechanism as claimed in any one of the Claims 1 to 8, **characterized in that** the transport wheel (21, 66, 103) comprises a supporting surface (104) adapted to support one side (102a) of the disc edge of the information disc (102), the transport wheel (22, 66, 103) has a contact edge (105) against which the edge (102c) of the information disc (102) can be pressed, and there has been provided a pressure element (106) adapted to be pressed against the other side (102b) of the disc edge of the information disc (102).

12. A loading mechanism as claimed in any one of the Claims 1 to 8, **characterized in that** the supporting guide (9, 62) comprises a supporting surface (104) adapted to support one side (102a) of the disc edge of the information disc (102), **in that** the supporting guide (9, 62) has a contact edge (105) against which the edge (102c) of the information disc (102) can be pressed, and **in that** there has been provided a pressure element (106) adapted to be pressed against the other side (102b) of the disc edge of the information disc (102).

13. A loading mechanism as claimed in any one of the Claims 1 to 12, **characterized in that** there has been provided an auxiliary guide (86) which enables the disc edge (2a, 52a) of the information disc (2, 52) to be additionally guided in an intermediate stage of the loading process.

14. A loading mechanism as claimed in any one of the Claims 1 to 13, **characterized in that** the supporting guide (9, 62) and the loading guide (21, 66) exert pressure on the disc edge (2a, 52a) in an eject position and hold the information disc (2, 52) in a stable manner in this eject position so as to prevent the information disc (2, 52) from rolling out the apparatus and allow the user to remove the information disc (2, 52) in the eject position.

15. A loading mechanism as claimed in any one of the Claims 1 to 14, **characterized in that** a positioning hole (3, 53) of the information disc (2, 52) projects from the front (4a, 56a) of the housing (1, 51) in an intermediate position in which the information disc (2, 52) is inserted by the user and from which the loading mechanism automatically rolls in the information disc (2, 52), thus enabling the user to insert the information disc (2, 52) by hand in such a manner that the hand of the user only touches the information disc at the inner edge (3a, 53a) of the positioning hole (3, 53) of the information disc (2, 52) and at the periphery (2a, 52a) of the information disc.

16. A deck including a loading mechanism as claimed in any one of the Claims 1 to 15.

17. An apparatus for recording and/or reproducing information on/from an information disc, including a deck as claimed in Claim 16.

18. A car radio including a deck as claimed in Claim 16.

## Revendications

1. Mécanisme de chargement pour un appareil d'enregistrement d'informations sur un disque d'information (2, 52) et/ou de lecture d'informations enregistrées sur un disque d'information (2, 52) qui présente des guidages pour le bord de disque (2a, 52a) par lesquels un guidage d'appui (9, 62) est conçu comme un palier d'appui pour le bord de disque pressé contre celui-ci et un guidage de chargement (21, 66) est conçu comme une roue de transport (21, 66) à entraîner à rotation qui introduit par roulement le disque d'information (2, 52) pour son chargement dans l'appareil ou l'extrait par roulement pour le déchargement de celui-ci, dans lequel le guidage d'appui (0,62) et le guidage de chargement (21, 66) guident le disque d'information (2) sur une voie de chargement (45, 54) et dans lequel le guidage d'appui (9, 62) et le guidage de chargement (21, 66) sont logés à déplacement dans un plan de chargement (43, 75)
**caractérisé en ce**
**que** le guidage d'appui (9, 62) est conçu comme un palier d'appui fixé sans rotation sur un bras pivotant (7, 57) pour le bord de disque (2a, 52a) pressé contre ce palier.

2. Mécanisme de chargement selon la revendication 1, **caractérisé en ce que** le guidage d'appui (9, 62) et le guidage de chargement (21, 66) sont disposés sur des bras pivotants (7; 12; 57, 59) logés unilatéralement.

3. Mécanisme de chargement selon l'une des revendications 1 ou 2, **caractérisé en ce que** le guidage d'appui (9, 62) et le guidage de chargement (21, 66) conduisent le disque d'information lors de son introduction et de son extraction sur une voie de chargement (45, 54) essentiellement rectiligne.

4. Mécanisme de chargement selon l'une des revendications 2 ou 3, **caractérisé en ce que** les deux bras pivotants (7, 12; 57, 59) sont respectivement précontraints dans la direction de la voie de chargement (45, 54).

5. Mécanisme de chargement selon l'une des revendications 1 à 3, **caractérisé en ce que** les bras pivotants (7, 12; 57, 59) sont couplés l'un avec l'autre.

6. Mécanisme de chargement selon la revendication 5, **caractérisé en ce que** le couplage des deux bras pivotants (7, 12) est réalisé à l'aide d'un ressort de traction (30) tendu entre les deux bras pivotants (7,12).

7. Mécanisme de chargement selon la revendication 6, **caractérisé en ce que** les bras pivotants sont couplés à l'aide d'une tige d'accouplement (76) et qu'au moins un des bras pivotants (57, 59) est précontraint dans la direction du milieu du plan de chargement (75).

8. Mécanisme de chargement selon la revendication 7, **caractérisé en ce que** la tige d'accouplement (76) présente au moins deux rainures longitudinales (77, 78) dans lesquelles entrent respectivement en prise une broche de bras pivotant (61, 64) disposée sur le bras pivotant (57, 59) et que la tige d'accouplement (76) présente au moins une broche de tige d'accouplement (79, 80) qui entre en prise dans une rainure de couvercle de boîtier (81) d'un couvercle de boîtier (56f) s'étendant dans la direction de chargement (54) rectiligne.

9. Mécanisme de chargement selon l'une des revendications 1 à 8, **caractérisé en ce que** la roue de transport (21, 66) présente une rainure (22, 68) dans laquelle le bord de disque (2a, 52a) du disque d'information (2, 52) peut être guidé.

10. Mécanisme de chargement selon l'une des revendications 1 à 9, **caractérisé en ce que** le guidage d'appui (9, 62) présente une rainure (10, 63) dans laquelle le bord de disque (2a, 52a) du disque d'information (2, 52) peut être guidé.

11. Mécanisme de chargement selon l'une des revendications 1 à 8, **caractérisé en ce que** la roue de transport (21, 66, 103) présente une surface d'application (104) sur laquelle peut être appliquée une face (102a) du bord de disque du disque d'information (102), que la roue de transport (22, 66, 103) présente un bord de butée (105) contre lequel l'arête (102c) du bord de disque du disque d'information (102) peut être pressée et qu'il est prévu un élément de compression 106 qui peut être pressé contre l'autre face (102b) du bord de disque du disque d'information (102).

12. Mécanisme de chargement selon l'une des revendications 1 à 8, **caractérisé en ce que** le guidage d'appui (9,62) présente une surface d'application (104) sur laquelle une face (102a) du bord de disque du disque d'information (102) peut être appliquée, que le guidage d'appui (9, 62) présente un bord de butée (105) contre lequel l'arête (102c) du bord de disque du disque d'information (102) peut être pressée et qu'il est prévu un élément de pression (106) qui peut être pressé contre l'autre face (102b) du bord de disque du disque d'information (102).

13. Mécanisme de chargement selon l'une des revendications 1 à 12, **caractérisé en ce qu'**il est prévu un guidage auxiliaire (86) qui permet dans une zone centrale du processus de chargement un guidage supplémentaire pour le bord de disque (2a, 52a) du disque d'information (2, 52).

14. Mécanisme de chargement selon l'une des revendications 1 à 13, **caractérisé en ce que** le guidage d'appui (9, 62) et le guidage de chargement (21, 66) pressent dans une position d'éjection contre le bord de disque (2a, 52a) et maintiennent le disque d'information (2, 52) dans cette position d'éjection de manière à empêcher une extraction automatique par roulement du disque d'information (2, 52) de l'appareil et à pouvoir extraire le disque d'information (2, 52) par l'opérateur dans la position d'éjection.

15. Mécanisme de chargement selon l'une des revendications 1 à 14, **caractérisé en ce qu'**un orifice de positionnement (3, 53) du disque d'information (2, 52) déborde de l'appareil par la face antérieure (4a, 56a) du boîtier (1,51) de l'appareil dans une position intermédiaire dans laquelle le disque d'information (2, 52) est enfoncé par l'opérateur et s'enfonce automatiquement par roulement et de laquelle le mécanisme de chargement enfonce automatiquement par roulement le disque d'information (2, 52), ce qui permet à l'opérateur d'introduire le disque d'information (2, 52) par sa main dans la position intermédiaire de telle sorte que celui-ci ne soit touché par la main de l'opérateur que sur le bord interne (3a, 53a) de l'orifice de positionnement (3, 53) du disque d'information (2, 52) et sur le bord extérieur (2a, 52a) du disque d'information.

16. Mécanisme d'entraînement avec un mécanisme de chargement selon l'une des revendications 1 à 15.

17. Appareil d'enregistrement et/ou de lecture d'informations enregistrées sur un disque d'information avec un mécanisme d'entraînement selon la revendication 16.

18. Autoradio avec un mécanisme d'entraînement selon la revendication 16.
